(19) **Europäisches Patentamt European Patent Office Office européen des brevets**

(11) **EP 2 988 291 B1**

(12) **EUROPEAN PATENT SPECIFICATION**

(45) Date of publication and mention
of the grant of the patent:
**06.02.2019 Bulletin 2019/06**

(51) Int Cl.:
*G09C 1/00* (2006.01)          *H04L 9/32* (2006.01)
*H04L 9/08* (2006.01)          *H04L 9/14* (2006.01)

(21) Application number: **15182055.2**

(22) Date of filing: **21.08.2015**

(54) **METHOD, SYSTEM AND COMPUTER PROGRAM FOR PERSONAL DATA SHARING**

VERFAHREN, SYSTEM UND COMPUTERPROGRAMM ZUR GEMEINSAMEN NUTZUNG PERSÖNLICHER DATEN

PROCÉDÉ, SYSTÈME ET PROGRAMME INFORMATIQUE PERMETTANT DE PARTAGER DES DONNÉES PERSONNELLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.08.2014 GB 201414929**

(43) Date of publication of application:
**24.02.2016 Bulletin 2016/08**

(73) Proprietor: **GB Group plc**
**London E14 9QD (GB)**

(72) Inventors:
• **THOMPSON, Tamlyn**
**London, E14 9QD (GB)**
• **ZEIDAN, Zaher**
**London, E14 9QD (GB)**
• **SAWAN, Mohamed Sakher**
**London, E14 9QD (GB)**
• **HASKOL, Mohammad**
**Canary Wharf, London E14 9QD (GB)**

(74) Representative: **Armstrong, Rosemary**
**Armstrong IPR Limited**
**Innovation Centre**
**NI Science Park**
**Queens Road**
**Belfast, BT3 9DT (GB)**

(56) References cited:
**US-A1- 2010 199 098      US-A1- 2012 008 769**

• **THOMAS HUPPERICH ET AL: "Flexible patient-controlled security for electronic health records", PROCEEDINGS OF THE 2ND ACM SIGHIT SYMPOSIUM ON INTERNATIONAL HEALTH INFORMATICS, IHI '12, 1 January 2012 (2012-01-01), page 727, XP055238318, New York, New York, USA DOI: 10.1145/2110363.2110448 ISBN: 978-1-4503-0781-9**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field of the Invention

The present invention relates to a method, system and computer program for secure personal data sharing, and more specifically, a method, system and computer program for encrypting personal data in accordance with a one or more aspects of the subject of the personal data.

Background to the Invention

Growing public use of mobile communications technologies and the convergence of these technologies with sensors and online social networks has caused an exponential increase in the creation and consumption of personal data. At the same time, information rights are higher than ever on the public agenda as more and more transactions are done online. As technology advances, and with it capability in areas of sharing and using data to its full effect, the privacy issues inherent in personal data become more and more apparent. We expect organisations to share our personal data where necessary to provide us with the services they want. We expect society to use its information resources to stop crime and fraud and to keep citizens safe and secure. However, people also want to know how their information is being used, who has access to it, and what that means for them. People also expect an appropriate level of choice and control, especially over their sensitive data. Thus, it is increasingly vital that an appropriate balance is realized between maximising the potential advantages of sharing personal data to the general public while ensuring that individual's rights are respected with regard to their personal data.

The UK Data Protection Act 1998 ("DPA") requires data controllers to take "appropriate technical and organisational measures" to keep personal data safe and secure. Encryption technologies fall within "the state of technological development" and should be deployed in appropriate situations. While encryption of data communicated between licensed establishments may provide a degree of security thereto, nonetheless, a database of information about relevant offenders is particularly vulnerable to a central point of attack hack. In particular, anyone gaining unauthorised access to such a database would gain access to all of the sensitive personal data of the persons contained in the database.

The potential benefits of providing shared access to personal digital information are becoming increasingly evident throughout the medical research and health service provision communities. In Electronic Health Record (EHR) management, data about an individual could be collected from various health care centres over a patient's lifetime; and that data may need to be shared amongst a variety of health care centres and medical practitioners. While it has been suggested that cloud computing provides a better platform for connecting various communities providing data and location independence with less maintenance. However, a cloud environment introduces an even greater risk to security and privacy of sensitive data. Data stored in cloud may reside on computers that are located in dispersed geographic locations and the data can potentially be accessed during transit and storage.

Flexible Patient-Controlled Security for Electronic Health Records, T. Hupperich, H. Lohr, A.R. Saeghi and M. Winandy, Proceedings of the 2nd ACM SIGHIT International Health Informatics Symposium, Pages 727-732 describes an attribute-based encryption (ABE) system in which data are encrypted by specific attributes (e.g. the patient's name) and are decrypted if the decrypting user matches these attributes.

Summary of the Invention

According to a first aspect of the invention there is provided a secure personal data sharing method comprising the steps of:

receiving personal data relating to an enrollee and creating one or enrollee tokens therefrom, the enrollee tokens comprising biometric features of the enrollee or a digital token from the enrollee;
performing public key encryption of the or each enrollee token to create one or more enrollee primary keys therefrom;
using a hash algorithm on the or each enrollee token to create one or more enrollee secondary keys therefrom;
creating a unique enrollee random key and using a symmetric encryption algorithm to encrypt the enrollee random key with the or each enrollee secondary key and thereby create one or more enrollee tertiary keys;
using a symmetric encryption algorithm to encrypt the personal data relating to the enrollee with the enrollee random key to create encrypted personal data;
storing the encrypted personal data, the or each enrollee tertiary key, the or each enrollee primary key and details of the relationships therebetween in a remote data archive;
receiving a candidate token from a candidate and performing public key encryption of the candidate token to create a candidate primary key therefrom;
comparing the candidate primary key with the enrollee primary keys stored in the data archive and in the event of a match between the candidate primary key and an enrollee primary key

retrieving from the data archive the enrollee tertiary key corresponding with the enrollee primary key that matches the candidate primary key;

using a hash algorithm on the candidate token to create a candidate secondary key therefrom;

decrypting the retrieved enrollee tertiary key with the candidate secondary key to regenerate the enollee random key

retrieving from the data archive, the encrypted personal data corresponding with the enrollee primary key that matches the candidate primary key; and

decrypting the retrieved encrypted personal data with the enrollee random key to regenerate the personal data relating to the enrollee .

Preferably, the secure personal data sharing method comprises the step of notifying an operator that the candidate is not an enrolled member, in the event the candidate primary key does not match any of the enrollee primary keys stored in the data archive.

Preferably, the step of performing public key encryption of the candidate token to create a candidate primary key therefrom, employs a public key encryption algorithm which matches a public key encryption algorithm employed in the step of performing public key encryption of the or each enrollee token to create one or more enrollee primary keys therefrom.

Preferably, the step of using a hash algorithm on the candidate token to create a candidate secondary key therefrom employs a similar hash algorithm as used in the step of using a hash algorithm on the or each enrollee token to create one or more enrollee secondary keys therefrom.

Desirably, the step of decrypting the retrieved enrollee tertiary key with the candidate secondary key to regenerate the enollee random key employs an algorithm which mirrors the symmetric encryption algorithm used to encrypt the enrollee random key with the or each enrollee secondary key to create the or each enrollee tertiary keys.

Desirably, the step of decrypting the retrieved encrypted personal data with the enrollee random key to regenerate the personal data relating to the enrollee employs an algorithm which mirrors the symmetric encryption algorithm used to encrypt 68 the personal data relating to the enrollee with the enrollee random key to create encrypted personal data.

Desirably, the step of performing public key encryption of the or each enrollee token to create one or more enrollee primary keys therefrom, comprises the step of using a public key encryption algorithm selected from the set of public key encryption algorithms comprising the RSA algorithm, the Paillier cryptosystem and the ElGamal algorithm.

Preferably, the step of using a hash algorithm on the or each enrollee token to create one or more enrollee secondary keys therefrom, comprises the step of using a hash algorithm selected from the set of hash algorithms comprising the Secure Hash Algorithm (SHA), HAVAL (HAsh of VAriable Length), Whirlpool and Tiger algorithm.

Preferably, the step of using a symmetric encryption algorithm to encrypt the personal data relating to the enrollee with the enrollee random key to create encrypted personal data, comprises the step of using a symmetric encryption algorithm selected from the set of symmetric encryption algorithms comprising the Advanced Encryption Standard (AES) algorithm, the Blowfish, the Data Encryption Standard (DES) algorithm and the Serpent algorithm.

Preferably, the step of creating a unique enrollee random key comprises the step of creating the enrollee random key using a pseudorandom binary generator algorithm selected from the set of pseudorandom binary generator algorithms comprising Wichmann Hill algorithm, the Mersenne Twister, the lagged Fibonacci generator.

Desirably, the step of receiving a candidate token from a candidate is preceded by a step comprising receiving one or more items of personal data from the candidate and calculating the candidate token therefrom.

According to a second aspect of the invention there is provided a secure personal data sharing system comprising means adapted to perform the secure personal data sharing method of the first aspect.

According to a third aspect of the invention there is provided a secure personal data sharing computer program, tangibly embodied on a computer readable medium, the computer program product including instructions for causing a computer to execute the secure personal data sharing method of the first aspect.

The secure personal data sharing method enables personal data to be encrypted and freely shared without fear of the personal data being exposed or compromised by hacking. Instead of prior art approaches of controlling access to personal data to protect the personal data, the secure personal data sharing method enables the subject of the personal data to become the key to unlocking the personal data.

Since the data storage module in the a secure personal data sharing system only stores encrypted data, the secure personal data sharing system is invulnerable to a "central point of attack" hack, because even if a party was to gain unauthorised access to the data storage module, they would be unable to understand the encrypted data stored therein.

Furthermore, even with unauthorised access to the primary and tertiary keys in the secure personal data sharing system, it is not possible to gain access to any more than a single enrollee record, because each such record is separately encrypted in accordance with specific features of the owner of the record. Thus, in the absence of all of the enrollees with the secure personal data sharing system (and more specifically, their tokens) it will not be possible to gain access to all of the data in the data storage module. Furthermore, on permanent destruction of the private key *priv_key,* no-one (not even the administrators of the data storage module (or owners of the secure personal data sharing system)) can decrypt all the records in the data storage module. Accordingly, the secure personal data sharing system is secure against external and internal attack.

Apart from information that may be stored in the cache of a given computer within the network, the computers do not store nor do they have access to the personal data of enrolees to the personal data encryption system. Thus, access could not be gained to the repository of personal data of enrollees by hacking into the networked computers in the personal data encryption system.

By creating multiple tokens the preferred embodiment of the secure personal data sharing provides maximum flexibility for subsequently interrogating records of enrollees in the system for encrypting personal data; and thereby, accommodate the possibility that a person enrolling with the system for encrypting personal data at one venue may not provide the same token when later attempting to seek entry to a different venue.

The advantage of using a hash algorithm is that the encryption is irreversible, so that even if the resulting secondary key $\underline{SK} \in \mathbb{R}^m$ was intercepted by an unauthorised party, it would not be possible for the party to invert the hash algorithm and thereby determine the originating token $\underline{T} \in \mathbb{R}^m$.

Description of the Invention

Preferred embodiments of the present invention are herein described, by way of example of only, with reference to the accompanying figures in which:

Figure 1 is a block diagram of the secure personal data sharing system in accordance with the second aspect of the invention; and

Figure 2 is a flow diagram of the secure personal data sharing method in accordance with the first aspect of the invention.

Detailed Description

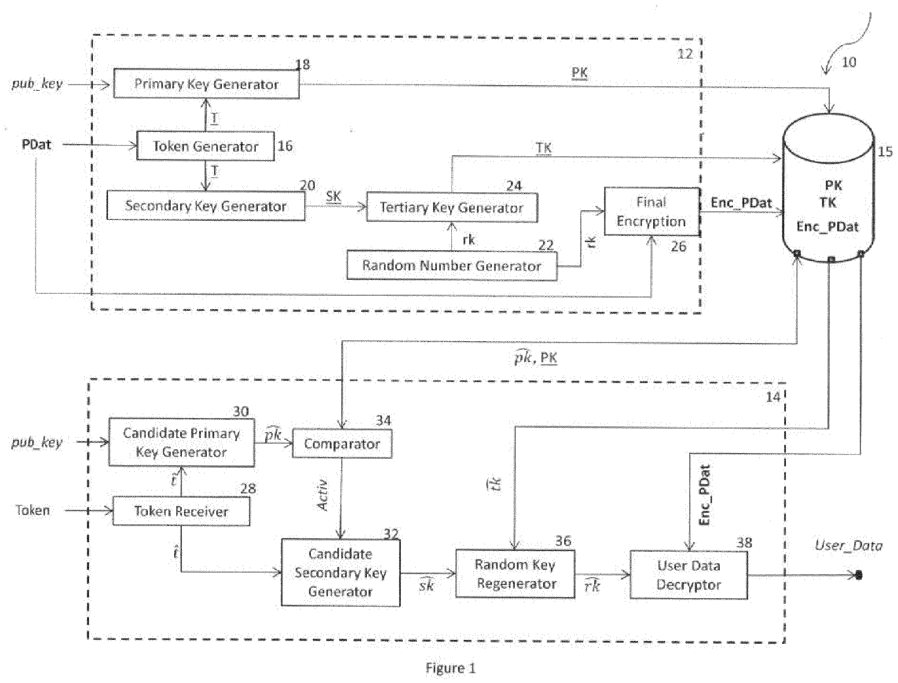

Referring to Figure 1, while certain specific features are illustrated, those skilled in the art will appreciate from the present disclosure that various other features have not been illustrated for the sake of brevity and so as not to obscure more pertinent aspects of the implementations disclosed herein. Similarly, and for clarity, the term "personal data" will be used below to refer to data relating to a living individual who is or can be identified either from the data or from the data in conjunction with other information.

The preferred embodiment of the secure personal data sharing system 10 may comprise an enrolment module 12, a retrieval module 14 and a data storage module 15, wherein the enrolment module 12 and the retrieval module 14 are both communicably coupled with the data storage module 15 to respectively transmit encrypted data to the data storage module 15 and receive encrypted data therefrom.

The enrolment module 12 may comprise a token generator 16 which may be adapted to receive personal data $\mathbf{PDat} \in \mathbb{R}^p$ pertaining to an enrollee (not shown). The token generator 16 may further be adapted to generate a plurality of tokens $\underline{T} \in \mathbb{R}^m$ (m<p) from the received personal data $\mathbf{PDat}$ [$\underline{T}=F_1(\mathbf{PDat})$]. For the sake of example, the token generator 16 could generate three tokens from the personal data $\mathbf{PDat,}$ namely:

$t_1$= concatenated alphanumeric string comprising the enrollee's name and data of birth;
$t_2$= concatenated string comprising the enrollee's first name and second name;
$t_3$= concatenated alphanumeric string details (name) of the type of identifying document presented by the enrollee to prove their identity and the number of the said identifying document (e.g. British passport number 99999.99). It will of course be understood by the person skilled in the art that the above tokens are provided for explanatory purposes only and that the system of the preferred embodiment is in no way limited either to the number of tokens that can be generated by the token generator, or the specific formulations of the tokens from the provided personal data. For example, the tokens may also include biometric features of the enrollee (e.g. fingerprint, iris scan etc.) or other digital token (e.g. password, passport image, barcode etc) provided by the enrollee.

The enrolment module 12 may further comprise a primary key generator 18 and a secondary key generator 20 communicably coupled with the token generator 16. The primary key generator 18 may be adapted to receive one or more of the tokens $T_i$ from the token generator 16; and to implement a public key encryption algorithm (e.g. RSA algorithm), on the received token(s) $\underline{T} \in \mathbb{R}^m$ to generate one or more primary keys $\underline{PK} \in \mathbb{R}^m$ therefrom [PK $=F_2(\underline{T})$]. The encryption is performed using a static public key *pub_key* from a public-private key pair (*pub_key, priv_key*). The private key *priv_key* is not actually used in any component of the secure personal data sharing system 10. However, the private key *priv_key* is, in effect, the only mechanism by which all of the resulting records stored in the data storage module 15 may be decrypted. To remove this vulnerability, the private key *priv_key* may be permanently destroyed. The skilled person will understand that the RSA algorithm is mentioned above for explanatory purposes only. In particular, the skilled person will understand that the secure personal data sharing system 10 is not limited to using the RSA algorithm. On the contrary, the primary key generator 18 may use any appropriate public key encryption algorithm including, but not limited to, the Paillier cryptosystem, the ElGamal algorithm etc.

The secondary key generator 20 may be adapted to receive one or more of the tokens $\underline{T} \in \mathbb{R}^m$ from the token generator 16; and to implement hash algorithm thereon to generate one or more secondary keys $\underline{SK} \in \mathbb{R}^m$ therefrom [$\underline{SK}=F_3(\underline{T})$]. The secondary key generator 20 may use any suitable hash algorithm, including, but not limited to, the Secure Hash Algorithm (SHA), HAVAL (HAsh of VAriable Length), Whirlpool or Tiger. The skilled person will understand that the above-mentioned hash algorithms are provided for illustration purposes only. More specifically, the skilled person will understand that the secure personal data sharing system 10 is not limited to these hash algorithms, and that, on the contrary, the secondary key generator 20 may use any hash algorithm as appropriate. Thus, in summary, the primary key generator 18 and the secondary key generator 20 may respectively generate a primary key $pk_i$ and a secondary key $sk_i$ from each token $t_i$ generated from the received personal data **PDat.**

The enrolment module 12 may further comprise a random number generator 22 which may be adapted to implement a pseudo-random number generator algorithm (e.g. Wichmann Hill algorithm, the Mersenne Twister, the lagged Fibonacci generator etc.) to generate a unique random key rk for each new enrollee with the system of the preferred embodiment. The person skilled in the art will understand that the above-mentioned pseudo-random number generator algorithms are provided for illustration purposes only and should in no way be construed as limiting the scope of the secure personal data sharing system 10. On the contrary, the random number generator 22 is operable with any random number generator tool (e.g. in hardware) or pseudo-random number generator algorithm as appropriate.

The enrolment module 12 may further comprise a tertiary key generator 24 communicably coupled with the secondary key generator 20 and the random number generator 22 to receive the secondary keys $\underline{SK} \in \mathbb{R}^m$ and random key rk respectively therefrom. The tertiary key generator may be adapted to implement a symmetric encryption algorithm, such as the Advanced Encryption Standard (AES) algorithm to create a one or more tertiary keys $\underline{TK} \in \mathbb{R}^m$ from the received secondary keys $\underline{SK} \in \mathbb{R}^m$ and the random key rk [$\underline{TK}=F_4(\underline{SK},rk)$]. More specifically, the or each tertiary keys $\underline{TK} \in \mathbb{R}^m$ are generated through the symmetric encryption of the random key rk with the or each secondary key $\underline{SK}$ (the or each secondary key $\underline{SK}$ acting as a symmetric encryption key to encrypt the random key rk itself). The skilled person will understand that the AES algorithm is mentioned above for illustration purposes only; and that the secure personal data sharing system 10 should in no way be construed as being limited to the use of the AES algorithm. On the contrary, the tertiary key generator 24 is operable with any symmetric encryption algorithm as appropriate (including Blowfish, DES, Serpent etc.).

The enrolment module 12 may further comprise a final encryption module 26 adapted to receive the random key rk (from the random number generator 22) and the personal data **PDat.** The final encryption module 26 may be adapted to use the random key rk in a symmetric encryption algorithm, such as the Advanced Encryption Standard (AES) algorithm to encrypt the personal data **PDat** and generate encrypted personal data **Enc_PDat** $\in \mathbb{R}^p$ [**Enc_PDat** $= F_5(\mathbf{PDat}, rk)$]. The skilled person will understand that the AES algorithm is mentioned above for illustration purposes only; and that the secure personal data sharing system 10 should in no way be construed as being limited to the use of the AES algorithm. On the contrary, the final encryption module 26 is operable with any symmetric encryption algorithm as appropriate (including Blowfish, DES, Serpent etc.).

The encrypted personal data **Enc_PDat,** the or each tertiary key $\underline{TK}$ and the or each primary key $\underline{PK}$ are stored in the data storage module 15 in an enrollee record (not shown) created for each corresponding enrollee (not shown). The or each primary key $\underline{PK}$ acts as record identifiers for the relevant enrollee record (not shown); and each primary key pk may be coupled with its corresponding tertiary key tk in the enrollee record (not shown), so that the enrollee record may maintain details of the corresponding relationships between the or each primary key PK and the or each tertiary key TK. Thus, the only data stored in the data storage module 15 is encrypted (either through public key encryption [the primary keys PK] or symmetric encryption [encrypted user data **Enc_PDat** and tertiary keys TK]. Since the data storage module 15 only stores encrypted data, the secure personal data sharing system 10 is invulnerable to a "central point of attack" hack, because even if a party was to gain unauthorised access to the data storage module 15, they would be unable to interpret the encrypted data stored therein.

The retrieval module 14 may comprise a token receiver 28 which may be adapted to receive a candidate token $\hat{t}$ from a candidate person (not shown) who may or may not have been enrolled with the secure personal data sharing system 10. The retrieval module 14 may further comprise a personal data receiver (not shown) which may be adapted to receive personal data from the candidate person (not shown), generate a candidate token $\hat{t}$ therefrom, and transmit the candidate token $\hat{t}$ to the token receiver 28, in the event the candidate person (not shown) is unable to furnish the candidate token $\hat{t}$ to the retrieval module 14.

The retrieval module 14 may further comprise a candidate primary key generator 30 and a candidate secondary key generator 32 communicably coupled with the token receiver 28, to receive the candidate token $\hat{t}$ therefrom. The candidate primary key generator 30 may be adapted to perform a public key encryption (using, for example, the RSA algorithm) on the candidate token $\hat{t}$ to generate a candidate primary key $\widehat{pk}$ therefrom $[\widehat{pk} = F_2(\hat{t})]$. The public key encryption algorithm used in the candidate primary key generator 30 may match the public key encryption algorithm used in the primary key generator 18 (in the enrolment module 12) and may use the same static public key *pub_key* as used in the primary key generator 18.

The candidate primary key generator 30 may be communicably coupled with a comparator module 34 to transmit the candidate primary key $\widehat{pk}$ to the comparator module 34. The comparator module 34 may be adapted to receive the candidate primary key $\widehat{pk}$ from the candidate primary key generator 30. The comparator module 34 may further be adapted to interrogate the data store module 15 to compare the candidate primary key $\widehat{pk}$ with the primary keys PK stored in the data store module 15. The comparator module 34 may be communicably coupled with the candidate secondary key generator 32 and adapted to transmit an activation signal *Activ* to the candidate secondary key generator 32 in the event a match is found between the candidate primary key $\widehat{pk}$ and a primary key pk in the data storage module 15. The activation signal *Activ* is an indicator that the candidate person (not shown) is an enrollee with the secure personal data sharing system 10.

The candidate secondary key generator 32 may be adapted on receipt of the activation signal *Activ* from the comparator module 34 to use a hash algorithm on the candidate token $\hat{t}$ (received from the token receiver 28) to generate a candidate secondary key $\widehat{sk}$ therefrom $[\widehat{sk} = F_3(\hat{t})]$. The hash algorithm employed in the candidate secondary key generator 32 may match the hash algorithm employed in the secondary key generator 20 (in the enrolment module 12). The candidate secondary key generator 32 may be communicably coupled with a random key regenerator module 36 to transmit the candidate secondary key $\widehat{sk}$ thereto.

The random key regenerator module 36 may be communicably coupled with the data store module 15 and may be adapted on receipt of the candidate secondary key $\widehat{sk}$ from the candidate secondary key generator 32 to retrieve from the data store module 15 the tertiary key $\widehat{tk}$ corresponding with the primary key pk that matches the candidate primary key $\widehat{pk}$. The random key regenerator module 36 may be adapted to employ a decryption algorithm (mirroring the encryption algorithm employed in the tertiary key generator 24 in the enrolment module 12) to decrypt the tertiary key $\widehat{tk}$ with the candidate secondary key $\widehat{sk}$ and generate the corresponding random key $\widehat{rk}$ therefrom $[\widehat{rk} = F_4^{-1}(\widehat{tk}, \widehat{sk})]$.

The random key regenerator module 36 may also be communicably coupled with a personal data decryption module 38 to transmit the random key $\widehat{rk}$ thereto. The personal data decryption module 38 may be adapted to receive

the random key $\widehat{rk}$ and may also be communicably coupled with the data storage module 15 to retrieve the encrypted personal data **Enc_PDat** from the enrollee record identified by the primary key pk which matches the candidate primary key $\widehat{pk}$. The personal data decryption module 38 may further be adapted to implement a decryption algorithm which mirrors the encryption algorithm employed in the final encryption module 26, and thereby decrypt the retrieved encrypted personal data **Enc_PDat** with the random key $\widehat{rk}$ to regenerate the personal data **(PDat)** of the candidate person (not shown) $[\mathrm{PDat} = F_5^{-1}\big(\widehat{rk}, \mathbf{Enc\_PDat}\big)]$.

From the above discussion, it can be seen that the secondary keys $\underline{SK} \epsilon \, \mathbb{R}^m$ are secure and not shared with users of the system for encrypting personal data. Users must calculate a secondary key $\widehat{sk}$ on achieving a match between a primary test key $\widehat{pk}$ and a primary key **PK** of an enrollee record in the data store module 15. By contrast, the primary keys $\underline{PK} \, \epsilon \, \mathbb{R}^m$, the tertiary keys $\underline{TK} \, \epsilon \, \mathbb{R}^m$ and encrypted personal data $\mathbf{Enc\_PDat} \, \epsilon \, \mathbb{R}^p$ are not secured and are shared with all of the users.

In use, the enrolment module 12 and the retrieval module 14 may be disposed in a plurality of computers networked to the data storage module 15 which is located remotely of the computers comprising the enrolment module 12 and the retrieval module 14. Accordingly, apart from information that may be stored in the cache of a given computer within the network, the computers do not store nor do they have access to the personal data of enrolees to the personal data encryption system. Thus, access could not be gained to the repository of personal data of enrollees by hacking into the networked computers in the personal data encryption system.

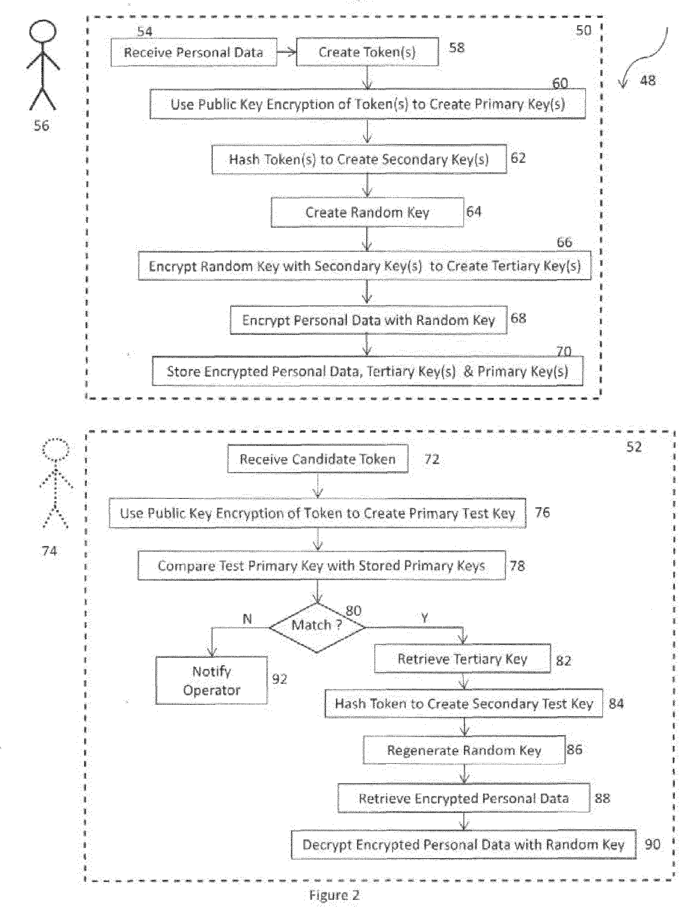

Referring to Figure 2 in combination with Figure 1, the preferred embodiment of the secure personal data sharing method 48 comprises two main phases, namely an enrolment phase 50 and a retrieval phase 52, wherein these two phases are respectively undertaken in the enrolment module 12 and the retrieval module 14 of the secure personal data sharing system 10. During the enrolment phase 50 a new member is enrolled into the system for encrypting personal data. In the case of a network for sharing information about persons banned from entry to licensed venues, the enrolment phase 50 involves receiving information about a person banned from entry to a particular venue to permit their subsequent identification by the same or other licensed venues. During the retrieval phase 52, a person's details are checked to determine whether they match those of anyone already enrolled with the secure personal data sharing system 10. In the afore-mentioned case of a network for sharing information about persons banned from entry to licensed venues, the retrieval phase 52 involves checking whether a person wishing to gain entry to a licensed venue has been previously banned from entering a venue within the network.

More specifically, the enrolment phase 50 comprises a first step of receiving 54 personal data $\mathbf{PDat} \, \epsilon \, \mathbb{R}^p$ relating to an enrollee 56. The enrolment phase 50 comprises a next step of creating 58 a one or more tokens $\underline{T} \, \epsilon \, \mathbb{R}^m (m < p)$ from the received personal data $[\underline{T}_{F_1}(\mathbf{PDat})]$. This step is performed in the token generator 16 of the secure personal data sharing system 10. The reason for potentially generating a plurality of tokens is to support the possibility that a person enrolling with the system for encrypting personal data at one venue may not provide the same token when later attempting to seek entry to a different venue. Thus, by creating multiple tokens the preferred embodiment provides maximum flexibility for subsequently interrogating (during the retrieval phase 52) records of enrollees in the system for encrypting personal data. However, the skilled person will understand that the preferred embodiment of the secure personal data sharing method 48 is not restricted to creating multiple tokens from provided personal data. Instead, the preferred embodiment secure personal data sharing method 48 may alternatively create only a single token for a given enrollee 56.

The enrolment phase 50 comprises a next step of performing 60 public key encryption (using the RSA or other suitable algorithm) on the or each token $\underline{T} \, \epsilon \, \mathbb{R}^m$ to create one or more primary keys $\underline{PK} \, \epsilon \, \mathbb{R}^m$ therefrom $[\underline{PK} = _{F_2}(\underline{T})]$. This step is performed in the primary key generator 18 of the secure personal data sharing system 10. The encryption process for creating the or each primary key PK by way of the public key infrastructure, uses a static public key *pub_key* from a public-private key pair (*pub_key, priv_key*). The private key *priv_key* is not actually used in any step of the secure personal data sharing method 48. However, the private key *priv_key* is, in effect, the only mechanism by which all of the resulting records stored in the data storage module 15 may be decrypted. To remove this vulnerability, the private key *priv_key* may be permanently destroyed. The skilled person will understand that the RSA algorithm is mentioned above for explanatory purposes only. In particular, the skilled person will understand that the secure personal data sharing method 48 is not limited to using the RSA algorithm. On the contrary, any appropriate public key encryption algorithm may be used including, but not limited to, the Paillier cryptosystem, the ElGamal algorithm etc.

The enrolment phase 50 comprises a next step of using 62 a hash algorithm (including, but not limited to, the Secure Hash Algorithm (SHA), HAVAL (HAsh of VAriable Length), Whirlpool or Tiger) on the or each token $\underline{\mathrm{T}} \, \epsilon \, \mathbb{R}^m$ to create one or more secondary keys $\underline{\mathrm{SK}} \, \epsilon \, \mathbb{R}^m$ therefrom [$\underline{\mathrm{SK}} =_{F_3}(\underline{\mathrm{T}})$]. This step is performed in the secondary key generator 20 of the secure personal data sharing system 10. The skilled person will understand that the above-mentioned hash algorithms are provided for illustration purposes only. More specifically, the skilled person will understand that the secure personal data sharing method 48 is not limited to these hash algorithms, and may, instead use any hash algorithm as appropriate. The advantage of using a hash algorithm in this step of the secure personal data sharing method 48 is that the encryption is irreversible, so that even if the resulting secondary key $\underline{\mathrm{SK}} \, \epsilon \, \mathbb{R}^m$ was intercepted by an unauthorised party, it would not be possible for the party to invert the hash algorithm and thereby determine the originating token $\underline{\mathrm{T}} \, \epsilon \, \mathbb{R}^m$.

The enrolment phase 50 comprises a next step of creating 64 a unique random key rk for the enrollee. This step is performed by the random number generator 22 of the secure personal data sharing system 10; and may use any suitable pseudo-random number generator algorithm (including, but not limited to, the Wichmann Hill algorithm, the Mersenne Twister, the lagged Fibonacci generator etc.). The skilled person will understand that the above-mentioned pseudo-random number generator algorithms are provided for illustration purposes only and should in no way be construed as limiting the scope of the secure personal data sharing method 48. On the contrary, the secure personal data sharing method 48 is operable with any random number generator tool (e.g. in hardware) or pseudo-random number generator algorithm as appropriate

The enrolment phase 50 comprises a next step of using a symmetric encryption algorithm (e.g. the Advanced Encryption Standard (AES) algorithm) to create a 66 one or more tertiary keys $\underline{\mathrm{TK}} \, \epsilon \, \mathbb{R}^m$ from the or each received secondary keys $\underline{\mathrm{SK}} \, \epsilon \, \mathbb{R}^m$ and the random key rk [$\mathrm{TK} =_{F_4}(\mathrm{SK}, rk)$]. More specifically, this step generates the tertiary key by encrypting the random key rk with the or each secondary key $\underline{\mathrm{SK}}$, so that the or each secondary key $\underline{\mathrm{SK}}$ acts as a symmetric encryption key to encrypt the random key rk itself). This step is performed in the tertiary key generator 24 of the secure personal data sharing system 10. The skilled person will understand that the AES algorithm is mentioned above for illustration purposes only; and that the secure personal data sharing method 48 should in no way be construed as being limited to the use of the AES algorithm. On the contrary, the secure personal data sharing method 48 is operable with any symmetric encryption algorithm as appropriate (including Blowfish, DES, Serpent etc.).

The enrolment phase 50 comprises a next step of using a symmetric encryption algorithm (e.g. the Advanced Encryption Standard (AES) algorithm) to encrypt 68 the personal data $\mathbf{PDat} \, \epsilon \, \mathbb{R}^p$ relating to the enrollee 56 with the random key rk to create encrypted personal data $\mathbf{Enc\_PDat} \, \epsilon \, \mathbb{R}^m \, [\mathbf{Enc\_PDat} = F_5(\mathbf{PDat}, \mathrm{rk})]$. This step is performed in the final encryption module 26 of the secure personal data sharing system 10. The skilled person will understand that the AES algorithm is mentioned above for illustration purposes only; and that the secure personal data sharing method 48 should in no way be construed as being limited to the use of the AES algorithm. On the contrary, the secure personal data sharing method 48 is operable with any symmetric encryption algorithm as appropriate (including Blowfish, DES, Serpent etc.).

The enrolment phase 50 comprises a next step of storing 70 the encrypted personal data **Enc_PDat,** the or each tertiary key $\underline{\mathrm{TK}}$ and the or each primary key $\underline{\mathrm{PK}}$ in the data storage module 15 of the secure personal data sharing system 10. The encrypted personal data **Enc_PDat,** the or each tertiary key $\underline{\mathrm{TK}}$ and the or each primary key $\underline{\mathrm{PK}}$ are stored in an enrollee record (not shown) for the enrollee. The or each primary key $\underline{\mathrm{PK}}$ acts as a record identifier for the relevant enrollee record (not shown). Each enrollee record (not shown) also maintains details of the correspondence relationships between the or each primary key $\underline{\mathrm{PK}}$ and the or each tertiary key $\underline{\mathrm{TK}}$.

The retrieval phase 52 of the secure personal data sharing method 48 comprises a first step of receiving 72 a candidate token $\hat{t}$ from a candidate person 74 (who may or may not have been enrolled with the secure personal data sharing system 10.). This step is performed by the token receiver 28 in the retrieval module 14 of the secure personal data sharing system 10. This step may be preceded by a step (not shown) of receiving one or more items of personal data from the candidate person 74 and calculating a candidate token $\hat{t}$ therefrom. This preceding step may be performed by a personal data receiver (not shown) in the secure personal data sharing system 10.

The retrieval phase 52 comprises a next step of using 76 a public key encryption algorithm on the candidate token $\hat{t}$ to create a candidate primary key $\widehat{pk}$ therefrom $[\widehat{pk} = F_2(\hat{t})].$ This step is performed in the candidate primary key generator 30 of the secure personal data sharing system 10. The public key encryption algorithm used on the candidate token $\hat{t}$ may match the public key encryption algorithm used on the or each token $\underline{T}$ (in the primary key generator 18). Similarly, the public key encryption algorithm used on the candidate token $\hat{t}$ may use the same static public key (*pub_key*) as used by the public key encryption algorithm used on the or each token $\underline{T}$.

The retrieval phase 52 comprises a next step of comparing 78 the candidate primary key $\widehat{pk}$ with the primary keys **PK** of every enrollee record stored in the data store module 15. This step is performed in the comparator module 34 of the secure personal data sharing system 10. In the event of a match 80 between the candidate primary key $\widehat{pk}$ and a primary key **PK** in the data store module 15, the retrieval phase 52 comprises a next step of retrieving 82 from the data store module 15 the tertiary key $\widehat{tk}$ corresponding with the primary key pk that matches the candidate primary key $\widehat{pk}$. The retrieval phase 52 comprises a next step of using 84 a hash algorithm on the candidate token $\hat{t}$ to create a candidate secondary key $\widehat{sk}$ therefrom $[\widehat{sk} = F_3(\hat{t})].$ This step is performed in the candidate secondary key generator 32 of the secure personal data sharing system 10. The retrieval phase 52 comprises a next step of decrypting the retrieved tertiary key $\widehat{tk}$ with the candidate secondary key $\widehat{sk}$ to regenerate 86 the random key $\widehat{rk}$ therefrom $[\widehat{rk} = F_4^{-1}(\widehat{tk}, \widehat{sk})].$ This step is performed in the random key regenerator module 36 of the secure personal data sharing system 10 and employs a decryption algorithm which mirrors the symmetric encryption algorithm employed creating the tertiary key generator during the enrolment phase 50.

The retrieval phase 52 comprises the next step of retrieving 88 from the data storage module 15 the encrypted personal data **Enc_PDat** from the enrollee record whose primary key pk matches the primary test key $\widehat{pk}$. This is followed by the step of decrypting 90 the retrieved encrypted personal data **Enc_PDat** with the random key $\widehat{rk}$ to regenerate the personal data **(PDat)** $[\textbf{PDat} = F_5^{-1}(\widehat{rk}, \textbf{Enc\_PDat})]$ of the candidate person 74 wherein the regenerated personal data **(PDat)** may be displayed (not shown) to an operator (not shown) of the retrieval module 14 of the secure personal data sharing system 10. The operator (not shown) may, for example, use this regenerated personal data **(PDat)** to determine whether or not to admit the candidate person 74 to the relevant venue. Similarly, in the event no match is found between the candidate primary key *pk* and a primary key pk in the data store module 15, the retrieval phase 52 comprises the step of notifying 92 the operator (not shown) of this finding.

It should be noted that the private key *priv_key* used in the step of creating the or each primary key $\underline{PK}$ during enrolment is the only piece of information that allows the decryption of all the enrollee records in the data storage module 15. In particular, the private key *priv_key* allows the decryption of all the primary keys $\underline{PK}$ for all of the enrollees, and once the primary keys $\underline{PK}$ are decrypted, it is possible to hash the decrypted token $\hat{t}$ and generate the secondary key $\underline{SK}$ and carry on to decrypt the corresponding personal data stored in the data storage module 15. However, since the private key is no longer needed (either during enrolment or retrieval) after the or each primary key $\underline{PK}$ is created, the private key *priv_key* can be permanently destroyed. On permanent destruction of the private key *priv_key,* no-one can decrypt all the records in the data storage module 15.

**Claims**

1. A secure personal data sharing method comprising the steps of:

   receiving (54) personal data relating to an enrollee and creating (58) one or more enrollee tokens therefrom, the enrollee tokens comprising biometric features of the enrollee or a digital token provided by the enrollee;
   performing (60) public key encryption of the or each enrollee token to create one or more enrollee primary keys therefrom;

using (62) a hash algorithm on the or each enrollee token to create one or more enrollee secondary keys therefrom;

creating (64) a unique enrollee random key and using (66) a symmetric encryption algorithm to encrypt the enrollee random key with the or each enrollee secondary key and thereby create one or more enrollee tertiary keys;

using (68) a symmetric encryption algorithm to encrypt the personal data relating to the enrollee with the enrollee random key to create encrypted personal data;

storing (70) the encrypted personal data, the or each enrollee tertiary key, the or each enrollee primary key and details of the relationships therebetween in a remote data archive;

receiving (72) a candidate token from a candidate and performing (76) public key encryption of the candidate token to create a candidate primary key therefrom;

comparing (78) the candidate primary key with the enrollee primary keys stored in the data archive and in the event of a match between the candidate primary key and an enrollee primary key,

retrieving (82) from the data archive the enrollee tertiary key corresponding with the enrollee primary key that matches the candidate primary key;

using (84) a hash algorithm on the candidate token to create a candidate secondary key therefrom;

decrypting (86) the retrieved enrollee tertiary key with the candidate secondary key to regenerate the enrollee random key;

retrieving (88) from the data archive, the encrypted personal data corresponding with the enrollee primary key that matches the candidate primary key; and

decrypting (90) the retrieved encrypted personal data with the enrollee random key to regenerate the personal data relating to the enrollee.

2. The secure personal data sharing method as claimed in Claim 1 wherein the method comprises the step of notifying (92) an operator that the candidate is not an enrolled member in the event the candidate primary key does not match any of the enrollee primary keys stored in the data archive.

3. The secure personal data sharing method as claimed in Claim 1 or Claim 2 wherein the step of performing (76) public key encryption of the candidate token to create a candidate primary key therefrom, employs a public key encryption algorithm which matches a public key encryption algorithm employed in the step of performing (60) public key encryption of the or each enrollee token to create one or more enrollee primary keys therefrom.

4. The secure personal data sharing method as claimed in any one of the preceding Claims, wherein the step of using (84) a hash algorithm on the candidate token to create a candidate secondary key therefrom employs a similar hash algorithm as used in the step of using (62) a hash algorithm on the or each enrollee token to create one or more enrollee secondary keys therefrom.

5. The secure personal data sharing method as claimed in any one of the preceding Claims wherein the step of decrypting (86) the retrieved enrollee tertiary key with the candidate secondary key to regenerate the enrollee random key employs an algorithm which mirrors the symmetric encryption algorithm used (66) to encrypt the enrollee random key with the or each enrollee secondary key to create the or each enrollee tertiary key.

6. The secure personal data sharing method as claimed in any one of the preceding Claims wherein the step of decrypting (90) the retrieved encrypted personal data with the enrollee random key to regenerate the personal data relating to the enrollee employs an algorithm which mirrors the symmetric encryption algorithm used to encrypt (68) the personal data relating to the enrollee with the enrollee random key to create encrypted personal data.

7. The secure personal data sharing method as claimed in any one of the preceding Claims wherein the step of performing (60) public key encryption of the or each enrollee token to create one or more enrollee primary keys therefrom, comprises the step of using a public key encryption algorithm selected from the set of public key encryption algorithms comprising the RSA algorithm, the Paillier cryptosystem and the ElGamal algorithm.

8. The secure personal data sharing method as claimed in any one of the preceding Claims wherein the step of using (62) a hash algorithm on the or each enrollee token to create one or more enrollee secondary keys therefrom, comprises the step of using a hash algorithm selected from the set of hash algorithms comprising the Secure Hash Algorithm (SHA), HAVAL (HAsh of VAriable Length), Whirlpool and Tiger algorithm.

9. The secure personal data sharing method as claimed in any one of the preceding Claims wherein the step of using (68) a symmetric encryption algorithm to encrypt the personal data relating to the enrollee with the enrollee random key to create encrypted personal data, comprises the step of using a symmetric encryption algorithm selected from the set of symmetric encryption algorithms comprising the Advanced Encryption Standard (AES) algorithm, the Blowfish, the Data Encryption Standard (DES) algorithm and the Serpent algorithm.

10. The secure personal data sharing method as claimed in any one of the preceding Claims wherein the step of creating (64) a unique enrollee random key comprises the step of creating the enrollee random key using a pseudorandom binary generator algorithm selected from the set of pseudorandom binary generator algorithms comprising Wichmann Hill algorithm, the Mersenne Twister, the lagged Fibonacci generator.

11. The secure personal data sharing method as claimed in any one of the preceding Claims wherein the step of receiving (72) a candidate token from a candidate is preceded by a step comprising receiving one or more items of personal data from the candidate and calculating the candidate token therefrom.

12. A secure personal data sharing system comprising means adapted to perform the secure personal data sharing method of any of the preceding Claims.

13. A secure personal data sharing computer program product, tangibly embodied on a computer readable medium, the computer program product including instructions for causing a computer to execute the secure personal data sharing method as claimed in any one of Claims 1 to 11.

## Patentansprüche

1. Verfahren zur sicheren gemeinsamen Nutzung persönlicher Daten, das folgende Schritte umfasst:

Empfangen (54) von persönlichen Daten, die sich auf einen Antragsteller beziehen, und Erzeugen eines oder mehrerer Antragsteller-Token (58) daraus diesen, wobei die Antragsteller-Token biometrische Merkmale des Antragstellers oder einen digitalen Token, der von dem Antragsteller bereitgestellt wurde, umfassen;
Durchführen (60) einer Verschlüsselung mit öffentlichem Schlüssel des oder jedes Antragsteller-Tokens, um einen oder mehrere Primärschlüssel des Antragstellers daraus zu erzeugen;
Verwenden (62) eines Hash-Algorithmus auf dem oder jeden Antragsteller-Token, um einen oder mehrere Sekundärschlüssel des Antragstellers daraus zu erzeugen;
Erzeugen (64) eines eindeutigen Zufallsschlüssels des Antragstellers und Verwenden (66) eines symmetrischen Verschlüsselungsalgorithmus zum Verschlüsseln des Zufallsschlüssels des Antragstellers mit dem oder jedem Sekundärschlüssel des Antragstellers, um dadurch einen oder mehrere Tertiärschlüssel des Antragstellers zu erzeugen;
Verwenden (68) eines symmetrischen Verschlüsselungsalgorithmus zum Verschlüsseln der persönlichen Daten in Bezug auf den Antragsteller mit dem Zufallsschlüssel des Antragstellers, um verschlüsselte persönliche Daten zu erzeugen;
Speichern (70) der verschlüsselten persönlichen Daten, des oder jedes Tertiärschlüssels des Antragstellers, des oder jedes Primärschlüssels des Antragstellers und Details der Beziehungen dazwischen in einem entfernten Datenarchiv;
Empfangen (72) eines Kandidaten-Tokens von einem Kandidaten und Durchführen (76) einer öffentlichen Schlüsselverschlüsselung des Kandidaten-Tokens, um daraus einen Primärschlüssel des Kandidaten zu erzeugen;
Vergleichen (78) des Primärschlüssels des Kandidaten mit den in dem Datenarchiv gespeicherten Primärschlüsseln des Antragstellers und im Falle einer Übereinstimmung zwischen dem Primärschlüssel des Kandidaten und einem Primärschlüssel des Antragstellers,
Abrufen (82) des Tertiärschlüssels des Antragstellers aus dem Datenarchiv, der dem Primärschlüssel des Antragstellers entspricht, der mit dem Primärschlüssel des Kandidaten übereinstimmt;
Verwenden (84) eines Hash-Algorithmus auf dem Kandidaten-Token, um daraus einen Sekundärschlüssel des Kandidaten zu erzeugen;
Entschlüsseln (86) des abgerufenen Tertiärschlüssels des Antragstellers mit dem Sekundärschlüssel des Kandidaten, um den Zufallsschlüssel des Antragstellers zu regenerieren;
Abrufen (88) der verschlüsselten persönlichen Daten aus dem Datenarchiv, die dem Primärschlüssel des Antragstellers entsprechen, der mit dem Primärschlüssel des Kandidaten übereinstimmt; und
Entschlüsseln (90) der abgerufenen verschlüsselten persönlichen Daten mit dem Zufallsschlüssel des Antragstellers, um die persönlichen Daten in Bezug auf den Antragsteller zu regenerieren.

**2.** Verfahren zur sicheren gemeinsamen Nutzung persönlicher Daten nach Anspruch 1, wobei das Verfahren den Schritt des Benachrichtigens (92) eines Bedieners umfasst, dass der Kandidat kein angemeldetes Mitglied ist für den Fall, dass der Primärschlüssel des Kandidaten nicht mit einem der Primärschlüssel des Antragstellers, die im Datenarchiv gespeichert sind, übereinstimmt.

**3.** Verfahren zur sicheren gemeinsamen Nutzung persönlicher Daten nach Anspruch 1 oder Anspruch 2 wobei der Schritt des Ausführens (76) der Verschlüsselung mit öffentlichem Schlüssel des Kandidaten-Tokens, um daraus einen Primärschlüssel des Kandidaten zu erzeugen, einen Verschlüsselungsalgorithmus mit öffentlichem Schlüssel verwendet, der einem Verschlüsselungsalgorithmus mit öffentlichem Schlüssel entspricht, der in dem Schritt des Ausführens (60) der Verschlüsselung mit öffentlichem Schlüssel des oder jedes Tokens des Antragstellers verwendet wird, um einen oder mehrere Primärschlüssel des Antragstellers daraus zu erzeugen.

**4.** Verfahren zur sicheren gemeinsamen Nutzung persönlicher Daten nach einem der vorhergehenden Ansprüche, wobei der Schritt des Verwendens (84) eines Hash-Algorithmus auf dem Kandidaten-Token, um einen Sekundärschlüssel des Kandidaten daraus zu erzeugen, einen ähnlichen Hash-Algorithmus verwendet, wie er in dem Schritt des Verwendens (62) eines Hash-Algorithmus auf dem oder jedem Token des Antragstellers verwendet wird, um einen oder mehrere Sekundärschlüssel des Antragstellers daraus zu erzeugen.

**5.** Verfahren zur sicheren gemeinsamen Nutzung persönlicher Daten nach einem der vorhergehenden Ansprüche, wobei der Schritt des Entschlüsselns (86) des abgerufenen Tertiärschlüssels des Antragstellers mit dem Sekundärschlüssel des Kandidaten zum Neugenerieren des Zufallsschlüssels des Antragstellers einen Algorithmus verwendet, der den symmetrischen Verschlüsselungsalgorithmus (66) widerspiegelt, um den Zufallsschlüssel des Antragstellers mit dem oder jedem Sekundärschlüssel des Antragstellers zu verschlüsseln, um den oder jeden Tertiärschlüssel des Antragstellers zu erzeugen.

**6.** Verfahren zur sicheren gemeinsamen Nutzung persönlicher Daten nach einem der vorhergehenden Ansprüche, wobei der Schritt des Entschlüsselns (90) der wiedergewonnenen verschlüsselten persönlichen Daten mit dem Zufallsschlüssel des Antragstellers zum Regenerieren der persönlichen Daten, die sich auf den des Antragsteller beziehen, einen Algorithmus verwendet, der den symmetrischen Verschlüsselungsalgorithmus widerspiegelt, der zum Verschlüsseln (68) der persönlichen Daten bezüglich des Antragstellers mit dem Zufallsschlüssel des Antragstellers verwendet wird, um verschlüsselte persönliche Daten zu erzeugen.

**7.** Verfahren zur sicheren gemeinsamen Nutzung persönlicher Daten nach einem der vorhergehenden Ansprüche, wobei der Schritt des Durchführens (60) der Verschlüsselung mit öffentlichem Schlüssel des oder jedes Tokens des Antragstellers zum Erzeugen eines oder mehrerer Primärschlüssel des Antragstellers den Schritt des Verwendens eines Verschlüsselungsalgorithmus mit öffentlichem Schlüssel umfasst, der aus dem Satz von Verschlüsselungsalgorithmen mit öffentlichem Schlüssel ausgewählt wird, der den RSA-Algorithmus, das Paillier-Kryptosystem und den ElGamal-Algorithmus umfasst.

**8.** Verfahren zur sicheren gemeinsamen Nutzung persönlicher Daten nach einem der vorhergehenden Ansprüche, wobei der Schritt des Verwendens (62) eines Hash-Algorithmus auf dem oder jedem Token des Antragstellers zum Erzeugen eines oder mehrerer Sekundärschlüssel des Antragstellers daraus den Schritt des Verwendens eines Hash-Algorithmen umfasst, aus dem Satz von Hash-Algorithmen ausgewählt wird, der den Secure-Hash-Algorithmus (SHA), den HAVAL-Algorithmus (HAsh variabler Länge), den Whirlpool- und den Tiger-Algorithmus umfasst.

**9.** Verfahren zur sicheren gemeinsamen Nutzung persönlicher Daten nach einem der vorhergehenden Ansprüche, wobei der Schritt des Verwendens (68) eines symmetrischen Verschlüsselungsalgorithmus zum Verschlüsseln der persönlichen Daten in Bezug auf den Antragsteller mit dem Zufallsschlüssel des Antragstellers, um verschlüsselte persönliche Daten zu erzeugen, den Schritt des Verwendens eines Verschlüsselungsalgorithmus mit öffentlichem Schlüssel umfasst, der aus dem Satz von Verschlüsselungsalgorithmen mit öffentlichem Schlüssel ausgewählt wird, der aus dem Advanced Encryption Standard-(AES) Algorithmus, dem Blowfish-Algorithmus, dem Data Encryption Standard- (DES) Algorithmus und dem Serpent-Algorithmus besteht.

**10.** Verfahren zur sicheren gemeinsamen Nutzung persönlicher Daten nach einem der vorhergehenden Ansprüche, wobei der Schritt des Erstellens (64) eines eindeutigen Zufallsschlüssels des Antragstellers den Schritt des Erstellens des Zufallsschlüssels des Antragstellers unter Verwendung eines Pseudozufalls-Binärgeneratoralgorithmus umfasst, der aus dem Satz von Pseudozufalls-Binärgeneratoralgorithmen ausgewählt wird, der den Wichmann-Hill-Algorithmus, den Mersenne Twister, den verzögerten Fibonacci-Generator umfasst.

**11.** Verfahren zur sicheren gemeinsamen Nutzung persönlicher Daten nach einem der vorhergehenden Ansprüche, wobei dem Schritt des Empfangens (72) eines Kandidaten-Tokens von einem Kandidaten ein Schritt vorausgeht, der das Empfangen eines oder mehrerer Elemente von persönlichen Daten von dem Kandidaten und das Berechnen des Kandidaten-Tokens daraus umfasst.

**12.** System zur sicheren gemeinsamen Nutzung persönlicher Daten, das Mittel umfasst, die dafür ausgelegt sind, das Verfahren zur sicheren gemeinsamen Nutzung persönlicher Daten nach einem der vorhergehenden Ansprüche durchzuführen.

**13.** Computerprogrammprodukt zur sicheren gemeinsamen Nutzung persönlicher Daten, das physikalisch auf einem computerlesbaren Medium gespeichert ist, wobei das Computerprogrammprodukt Anweisungen umfasst, um zu veranlassen, dass ein Computer das Verfahren zur sicheren gemeinsamen Nutzung persönlicher Daten gemäß einem der Ansprüche 1 bis 11 ausführt.

**Revendications**

**1.** Procédé permettant de partager des données personnelles de manière sécurisée comportant les étapes consistant à :

recevoir (54) des données personnelles se rapportant à un participant et créer (58) un ou plusieurs jetons de participant à partir de celles-ci, les jetons de participant comportant des caractéristiques biométriques du participant ou un jeton numérique fourni par le participant ;
effectuer (60) un chiffrement à clé publique dudit le ou chaque jeton de participant pour créer une ou plusieurs clés primaires de participant à partir de celui-ci ;
utiliser (62) un algorithme de hachage sur ledit le ou chaque jeton de participant pour créer une ou plusieurs clés secondaires de participant à partir de celui-ci ;
créer (64) une clé aléatoire de participant unique et utiliser (66) un algorithme de chiffrement symétrique pour chiffrer la clé aléatoire de participant avec ladite la ou chaque clé secondaire de participant et de ce fait créer une ou plusieurs clés tertiaires de participant ;
utiliser (68) un algorithme de chiffrement symétrique pour chiffrer les données personnelles se rapportant au participant avec la clé aléatoire de participant pour créer des données personnelles chiffrées ;
stocker (70) les données personnelles chiffrées, ladite la ou chaque clé tertiaire de participant, ladite la ou chaque clé primaire de participant et les détails des relations entre celles-ci dans des archives de données à distance ;
recevoir (72) un jeton de candidat en provenance d'un candidat et effectuer (76) un chiffrement à clé publique du jeton de candidat pour créer une clé primaire de candidat à partir de celui-ci ;
comparer (78) la clé primaire de candidat par rapport aux clés primaires de participant stockées dans les archives de données et dans le cas de figure d'une correspondance entre la clé primaire de candidat et une clé primaire de participant,
récupérer (82) en provenance des archives de données la clé tertiaire de participant correspondant à la clé primaire de participant qui correspond à la clé primaire de candidat ;
utiliser (84) un algorithme de hachage sur le jeton de candidat pour créer une clé secondaire de candidat à partir de celui-ci ;
déchiffrer (86) la clé tertiaire de participant récupérée avec la clé secondaire de candidat pour régénérer la clé aléatoire de participant ;
récupérer (88) en provenance des archives de données, les données personnelles chiffrées correspondant à la clé primaire de participant qui correspond à la clé primaire de candidat ; et
déchiffrer (90) les données personnelles chiffrées récupérées avec la clé aléatoire de participant pour régénérer les données personnelles se rapportant au participant.

**2.** Procédé permettant de partager des données personnelles de manière sécurisée selon la revendication 1, dans lequel le procédé comporte l'étape consistant à signaler (92) à un opérateur que le candidat n'est pas un membre participant dans le cas de figure où la clé primaire de candidat ne correspond à aucune des clés primaires de participant stockées dans les archives de données.

3. Procédé permettant de partager des données personnelles de manière sécurisée selon la revendication 1 ou la revendication 2, dans lequel l'étape consistant à effectuer (76) un chiffrement à clé publique du jeton de candidat pour créer une clé primaire de candidat à partir de celui-ci, emploie un algorithme de chiffrement à clé publique qui correspond à un algorithme de chiffrement à clé publique employé au cours de l'étape consistant à effectuer (60) un chiffrement à clé publique dudit le ou chaque jeton de participant pour créer une ou plusieurs clés primaires de participant à partir de celui-ci.

4. Procédé permettant de partager des données personnelles de manière sécurisée selon l'une quelconque des revendications précédentes, dans lequel l'étape consistant à utiliser (84) un algorithme de hachage sur le jeton de candidat pour créer une clé secondaire de candidat à partir de celui-ci emploie un algorithme de hachage similaire tel que celui utilisé au cours l'étape consistant à utiliser (62) un algorithme de hachage sur ledit le ou chaque jeton de participant pour créer une ou plusieurs clés secondaires de participant à partir de celui-ci.

5. Procédé permettant de partager des données personnelles de manière sécurisée selon l'une quelconque des revendications précédentes, dans lequel l'étape consistant à déchiffrer (86) la clé tertiaire de participant récupérée avec la clé secondaire de candidat pour régénérer la clé aléatoire de participant emploie un algorithme qui reflète l'algorithme de chiffrement symétrique utilisé (66) pour chiffrer la clé aléatoire de participant avec ladite la ou chaque clé secondaire de participant pour créer ladite la ou chaque clé tertiaire de participant.

6. Procédé permettant de partager des données personnelles de manière sécurisée selon l'une quelconque des revendications précédentes, dans lequel l'étape consistant à déchiffrer (90) les données personnelles chiffrées récupérées avec la clé aléatoire de participant pour régénérer les données personnelles se rapportant au participant emploie un algorithme qui reflète l'algorithme de chiffrement symétrique utilisé pour chiffrer (68) les données personnelles se rapportant au participant avec la clé aléatoire de participant pour créer des données personnelles chiffrées.

7. Procédé permettant de partager des données personnelles de manière sécurisée selon l'une quelconque des revendications précédentes, dans lequel l'étape consistant à effectuer (60) un chiffrement à clé publique dudit le ou chaque jeton de participant pour créer une ou plusieurs clés primaires de participant à partir de celui-ci, comporte l'étape consistant à utiliser un algorithme de chiffrement à clé publique sélectionné en provenance de l'ensemble d'algorithmes de chiffrement à clé publique comportant l'algorithme RSA, le cryptosystème de Paillier et l'algorithme d'Elgamal.

8. Procédé permettant de partager des données personnelles de manière sécurisée selon l'une quelconque des revendications précédentes, dans lequel l'étape consistant à utiliser (62) un algorithme de hachage sur ledit le ou chaque jeton de participant pour créer une ou plusieurs clés secondaires de participant à partir de celui-ci, comporte l'étape consistant à utiliser un algorithme de hachage sélectionné en provenance de l'ensemble d'algorithmes de hachage comportant l'algorithme ASH (Secure Hash Algorithm - Algorithme de hachage sécurisé), l'algorithme HAVAL (HAsh of Variable Length - hachage de longueur variable), l'algorithme Whirlpool et l'algorithme Tiger.

9. Procédé permettant de partager des données personnelles de manière sécurisée selon l'une quelconque des revendications précédentes, dans lequel l'étape consistant à utiliser (68) un algorithme de chiffrement symétrique pour chiffrer les données personnelles se rapportant au participant avec la clé aléatoire de participant pour créer des données personnelles chiffrées, comporte l'étape consistant à utiliser un algorithme de chiffrement symétrique sélectionné en provenance de l'ensemble d'algorithmes de chiffrement symétrique comportant l'algorithme AES (Advanced Encryption Standard - norme de chiffrement avancé), l'algorithme Blowfish, l'algorithme DES (Data Encryption Standard - standard de chiffrement des données) et l'algorithme Serpent.

10. Procédé permettant de partager des données personnelles de manière sécurisée selon l'une quelconque des revendications précédentes, dans lequel l'étape consistant à créer (64) une clé aléatoire de participant unique comporte l'étape consistant à créer la clé aléatoire de participant en utilisant un algorithme de génération binaire pseudoaléatoire sélectionné en provenance de l'ensemble d'algorithmes de génération binaire pseudoaléatoire comportant l'algorithme Wichmann Hill, le générateur Mersenne Twister, le générateur de Fibonacci du type décalé.

11. Procédé permettant de partager des données personnelles de manière sécurisée selon l'une quelconque des revendications précédentes, dans lequel l'étape consistant à recevoir (72) un jeton de candidat en provenance d'un candidat est précédée d'une étape comportant l'étape consistant à recevoir un ou plusieurs éléments de données personnelles en provenance du candidat et l'étape consistant à calculer le jeton de candidat à partir de celui-ci.

**12.** Système permettant de partager des données personnelles de manière sécurisée comportant un moyen adapté pour effectuer le procédé permettant de partager des données personnelles de manière sécurisée selon l'une quelconque des revendications précédentes.

**13.** Produit programme informatique permettant de partager des données personnelles de manière sécurisée, mis en oeuvre de manière matérielle sur un support lisible par ordinateur, le produit programme informatique comprenant des instructions servant à amener un ordinateur à exécuter le procédé permettant de partager des données personnelles de manière sécurisée selon l'une quelconque des revendications 1 à 11.

Figure 1

54
Receive Personal Data → Create Token(s) 58 50

48

60
Use Public Key Encryption of Token(s) to Create Primary Key(s)

Hash Token(s) to Create Secondary Key(s) 62

Create Random Key 64

66
Encrypt Random Key with Secondary Key(s) to Create Tertiary Key(s)

Encrypt Personal Data with Random Key 68

70
Store Encrypted Personal Data, Tertiary Key(s) & Primary Key(s)

56

52
Receive Candidate Token 72

Use Public Key Encryption of Token to Create Primary Test Key 76

Compare Test Primary Key with Stored Primary Keys 78

74

N    80    Y
Match ?

Notify Operator 92

Retrieve Tertiary Key 82

Hash Token to Create Secondary Test Key 84

Regenerate Random Key 86

Retrieve Encrypted Personal Data 88

Decrypt Encrypted Personal Data with Random Key 90

Figure 2

17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• GB 9999999 A

**Non-patent literature cited in the description**

• **T. HUPPERICH ; H. LOHR ; A.R. SAEGHI ; M. WINANDY.** Flexible Patient-Controlled Security for Electronic Health Records. *Proceedings of the 2nd ACM SIGHIT International Health Informatics Symposium,* 727-732